# EUROPÄISCHE PATENTSCHRIFT

(11) **EP 4 677 721 B1**
(45) Veröffentlichungstag und Bekanntmachung des Hinweises auf die Patenterteilung: **16.09.2026**
(21) Anmeldenummer: 24702227.0
(22) Anmeldetag: 08.01.2024
(51) Int. Cl.: H02K 1/276, H02K 15/03, H02K 15/12

(54) **PERMANENTMAGNET UND VERFAHREN ZUR HERSTELLUNG EINES ROTORS EINER DYNAMOELEKTRISCHEN MASCHINE MIT DERARTIGEN PERMANENTMAGNETEN**
PERMANENT MAGNET AND METHOD FOR MANUFACTURING ROTOR OF DYNAMO-ELECTRIC MACHINE USING SUCH PERMANENT MAGNETS
AIMANT PERMANENT ET PROCÉDÉ DE FABRICATION D'UN ROTOR DE MACHINE DYNAMO-ÉLECTRIQUE COMPRENANT DE TELS AIMANTS PERMANENTS

(30) Priorität: 03.03.2023 EP 23159831
(43) Veröffentlichungstag der Anmeldung: 14.01.2026
(73) Patentinhaber: Innomotics GmbH, 90441 Nürnberg (DE)
(72) Erfinder: BÜTTNER, Klaus, 97618 Hollstadt (DE); KIRCHNER, Klaus, 97645 Ostheim (DE); WARMUTH, Matthias, 97618 Windshausen (DE)
(74) Vertreter: Michalski Hüttermann & Partner mbB
(86) Internationale Anmeldenummer: PCT/EP2024/050288
(87) Internationale Veröffentlichungsnummer: WO 2024/183964

(56) Entgegenhaltungen:
- EP-A1- 2 448 094
- WO-A1-2018/206328
- CN-A- 106 487 171
- CN-A- 108 183 567
- JP-A- 2001 178 041
- US-A- 5 936 323
- US-A1- 2020 251 969
- US-A1- 2022 271 586

## Beschreibung

Die Erfindung betrifft einen Permanentmagneten, ein Verfahren zur Herstellung eines Rotors mit derartigen Permanentmagneten und eine dynamoelektrische Maschine mit einem derartigen Rotor als auch eine Verwendung einer derartigen dynamoelektrischen Maschine.

Rotoren z.B. von Synchronmotoren, insbesondere für Industrieanwendungen, werden üblicherweise mit vergrabenen Permanentmagneten im Rotor aufgebaut. Dazu werden axial verlaufende Ausnehmungen im Rotorblechpaket vorgesehen, wobei in Magnettaschen, als Teil der Ausnehmung, die Permanentmagnete axial eingeschoben werden. Zur leichteren Montage wird - im Wesentlichen in radialer Richtung betrachtet - die Höhe des Permanentmagneten fertigungsbedingt etwas kleiner als die Magnettaschenhöhe ausgebildet, so dass sich Fügespalte ergeben.

Die Fixierung der Permanentmagnete in der Ausnehmung wird üblicherweise durch einen Kleber oder Vergussmasse vorgenommen. Dabei werden die Permanentmagnete an ihrer Außenfläche verklebt, so dass u.a. der Fügespalt Kleber aufweist.

Es gibt verschiedene Verfahren und Verklebungen. Folgende Verfahren sind dabei bekannt.

Die Magnettaschen im Rotorblechpaket werden vorab mit dem Permanentmagneten bestückt. Anschließend wird auf die Stirnseite Kleber mit geringer Viskosität aufgebracht, der in die Fügespalte aufgrund der Schwerkraft einsickert bzw. kapilliert, so dass der Permanentmagnet verklebt wird. Dabei ist es nicht zu vermeiden, dass Kleber an der anderen Stirnseite und ggf. in die Flusssperren austritt. Um auch eine Verschmutzung des Werkzeugs zu vermeiden, werden hierzu Silikonfolien oder -scheiben als Trennung verwendet. Zudem wird für diese Technik eine Vorwärmung des Rotorblechpakets vorgenommen, um dadurch eine niedrigere Viskosität des Klebers zu erzielen, womit das Kapillieren in den Fügespalt begünstigt werden soll.

In einem anderen Verfahren werden vorab die Magnettaschen anteilig mit Kleber befüllt. Im Anschluss werden die Permanentmagnete eingeschoben, so dass der Kleber verdrängt wird und der Permanentmagnet im Kleber eingebettet wird. Hier ist das Werkzeug mit einer Schutzschicht vornehmlich aus Silikon beschichtet, so dass die durch Kleber benetzte Fläche nach dem Fügeprozess leicht zu reinigen ist. Überstehende Kleber wird dann abgestreift. Bei dieser Methode lässt sich zudem nicht vermeiden, dass die an den Seiten der Magnettaschen platzierten Flusssperren ebenfalls mit Kleber unwillkürlich befüllt werden, was zu einem erhöhtem, schwer kalkulierbaren Materialverbrauch des Klebers führt. Um die Verfestigung des Klebers zu beschleunigen, werden häufig thermische Prozesse, wie ein Aushärten im Ofen, nachgelagert.

Ein anderes Verfahren beschreibt die DE 10 2012 215 084 A1. Dabei wird den Ausnehmungen des Blechpakets des Rotors über zusätzliche Abdeckscheiben auf den Stirnseiten Vergussmasse zugeführt.

Ein anderes Verfahren beschreibt die WO 2018/206328 A1.

Ausgehend davon liegt der Erfindung die Aufgabe zugrunde, einen Rotor einer dynamoelektrischen Maschine, insbesondere einer permanenterregten Synchronmaschine, zu schaffen, der einfach herzustellen ist und die oben genannten Nachteile vermeidet.

Die Lösung der gestellten Aufgabe gelingt durch einen Permanentmagnet mit einer insbesondere quaderförmigen Grundstruktur für einen Rotor einer dynamoelektrischen Maschine, insbesondere einer permanenterregten Synchronmaschine,
mit zwei zu Flusssperren weisenden gegenüberliegenden Seiten (Flusssperrenseiten), zwei zu Stirnseiten weisenden gegenüberliegenden Seiten (Förderseite und Schubseite) und zwei Magnetfeldseiten (Luftspaltseite und Achsseite),
wobei Abschnitte der Förderseite und/oder daran anschließender Bereiche zumindest einer in dem Magnetfluss befindlichen Seite, wie der Luftspaltseite und/oder Achsseite, eine zumindest abschnittsweise Gestaltung, insbesondere eine abschnittsweise kurvenförmige/strömungstechnische Gestaltung aufweisen.

Die Lösung der gestellten Aufgabe gelingt auch durch ein Verfahren zur Herstellung eines Rotors mit vergrabenen erfindungsgemäßen Permanentmagneten,
wobei in axial verlaufende, umfänglich geschlossene Ausnehmungen eines Blechpaketes des Rotors, welche Ausnehmungen eine Magnettasche und Flusssperren aufweisen,
wobei der Permanentmagnet mit zwei zu Flusssperren weisenden gegenüberliegenden Seiten (Flusssperrenseiten), zwei zu Stirnseiten weisenden gegenüberliegenden Seiten (Förderseite) und Schubseite) und zwei Magnetfeldseiten (Luftspaltseite und Achsseite), versehen ist,
wobei Abschnitte der Förderseite und/oder daran anschließender Bereiche zumindest einer in dem Magnetfluss befindlichen Seite, wie der Luftspaltseite und/oder Achsseite, eine zumindest abschnittsweise Gestaltung, insbesondere eine abschnittsweise kurvenförmige/strömungstechnische Gestaltungen aufweisen,
wobei unter Zugabe von Kleber an die Förderseite des Permanentmagneten, dieser mit der Förderseite voraus jeweils axial in die Magnetasche eingeschoben wird und dort in der Magnettasche verklebt wird.

Die Lösung der gestellten Aufgabe gelingt auch durch ein Verfahren zur Herstellung eines Rotors, mit zwei oder mehreren erfindungsgemäß bestückten Blechpakete, die axial zu einem Gesamtblechpaket zusammengesetzt werden, derart, dass axial betrachtet, eine Staffelung vorliegt, indem die Blechpakete in Umfangsrichtung betrachtet, um einen vorgebbaren gleichen oder unterschiedlichen Winkel axial versetzt zusammengesetzt werden, wobei der Winkel 0° oder bis zu 30° sein kann.

Die Lösung der gestellten Aufgabe gelingt auch durch eine dynamoelektrische Maschine, insbesondere permanenterregte Synchronmaschine, mit einem erfindungsgemäßen Rotor.

Die Lösung der gestellten Aufgabe gelingt auch durch die Verwendung einer erfindungsgemäßen dynamoelektrischen Maschine, insbesondere permanenterregte Synchronmaschine, als Antrieb von Pumpen, Lüfter, Verdichter, Kompressoren, Rollgängen, Förderanlagen.

Um eine erfindungsgemäße Fixierung mittels eines Verfahrens von Permanentmagneten in Ausnehmungen eines Blechpaket eines Rotors zu erhalten, bei dem es möglich ist, eine Verklebung der Permanentmagnete vorzunehmen, ohne dass ein aufwändiger Reinigungsprozess an den Stirnseiten des Blechpakets der Magnettasche bzw. des Werkzeugs erforderlich ist, werden zunächst die dafür erfindungsgemäßen Permanentmagnete beschrieben.

Der erfindungsgemäße Permanentmagnet hat eine quaderförmige Grundstruktur mit sechs Seiten. Diese Seiten werden- auch anhand ihres späteren Einsatzes - mit folgenden Bezeichnungen versehen. Als Flusssperrenseiten werden die einander gegenüberliegenden Seiten des Permanentmagneten bezeichnet, die im späteren Einsatz im Blechpaket des Rotors zu den Flusssperren weisen. Als Förderseite bzw. Schubseite werden die einander gegenüberliegenden Seiten des Permanentmagneten bezeichnet, die im späteren Einsatz im Blechpaket des Rotors achsparallel ausgerichtet sind und zu den Stirnseiten des Blechpakets weisen. Als Luftspaltseite bzw. Achsseite werden die einander gegenüberliegenden Seiten des Permanentmagneten bezeichnet, die im späteren Einsatz im Blechpaket des Rotors in einem Magnetfluss liegen.

Erfindungsgemäß weisen dabei Abschnitte der Förderseite und daran anschließender Bereiche zumindest einer in dem Magnetfluss befindlichen Seite, also entweder Luftspaltseite und/oder Achsseite eine abschnittsweise Materialabtragung bzw. Gestaltung bei der Herstellung des Permanentmagneten auf, die die quaderförmige Grundstruktur strömungstechnisch formt. Durch diese Formgebung wird ein auf die Förderseite des Permanentmagneten gegebener Kleber bei axialer Bewegung des Permanentmagneten in der Magnettasche sich über die Spalte zwischen der der Luftspaltseite und der Innenseite der Magnettasche und der Achsseite und der Innenseite der Magnettasche verteilt, ohne die Flusssperren zu benetzen.

Mit anderen Worten - zumindest die Förderseite des Permanentmagneten weist eine hydrodynamische Kontur auf.

Die Kanten bzw. die Abschnitte zwischen Förderseite und zumindest einer Magnetfeldseite weist eine strömungstechnische oder kurvenförmige Gestaltung auf, um bei einem axialen Einschub des Permanentmagneten in eine axial verlaufende Ausnehmung eine ausreichende Kleberverteilung zwischen den Magnetfeldseiten und den dazu korrespondierenden Innenseiten der Magnettaschen zu erhalten.

Dabei weisen die Kanten plane Flächenelemente oder kurvenförmige Übergänge von der Förderseite zu zumindest einer Magnetfeldseite auf.

Um die Verteilung des Klebers zu gewährleisten, ist dabei der Abschnitt zwischen Förderseite und den Magnetfeldseiten symmetrisch gestaltet.

In einer weiteren Ausführung kann es auch vorteilhaft sein, wenn der Abschnitt zwischen Förderseite und den Magnetfeldseiten asymmetrisch gestaltet ist, was im Extremfall auch bedeuten kann, dass nur ein Abschnitt zwischen der Förderseite und einer Magnetfeldseite derartige Gestaltungen aufweist.

In einer weiteren Ausführung kann die Förderseite ergänzend zumindest einen Querkanal bzw. Mulde aufweisen, die von einer Magnetfeldseite zur anderen an der Förderseite verläuft. Dies dient ebenso der Verteilung des Klebers.

In einer weiteren Ausführung weist die Förderseite an ihren Rändern zu den Flusssperrenseiten hin Stege auf, die zur Kleberverteilung beitragen und vermeiden, dass der Kleber in die Flusssperren der Ausnehmungen im Blechpaket des Rotors eintritt. Diese Stege sind vor allem auch dann wichtig, wenn die Förderseite einen vergleichsweise kleineren Materialabtrag erfuhr.

Dabei ragt der Steg nicht zwangsläufig über die Förderseite hinaus, sondern bildet mit anderen Gestaltungselementen der Förderseite eine ebene Fläche.

Diese Stege an den Rändern der Förderseite und den Flusssperrenseiten, sind somit "Überbleibsel" der gestalteten quaderförmigen Grundstruktur. Die Stege verlaufen in ihrer Ausdehnung von einer Magnetfeldseite zu anderen.

Die Materialabtragung bzw. Gestaltung an der Förderseite des Permanentmagneten kann auch über die gesamte Breite einer oder beider Magnetfeldseiten reichen, so dass keine Stege vorhanden sind.

Die erfindungsgemäße Gestaltung der Permanentmagnete betrifft nicht nur die im Wesentlichen quaderförmig gestalteten Permanentmagneten, sondern auch andere Gestaltungen von Permanentmagneten, wie beispielsweise schalenförmige Permanentmagnete oder sogenannte "Brot-laib"-Permanentmagnete.

Die Permanentmagnete können dabei aus Seltenerden aufgebaut sein, ebenso ist es möglich diese Permanentmagneten aus Ferrit zu gestalten. Ebenso sind verschiedene Beschichtungen, wie Epoxy oder eine Passivierung möglich, um ev. Umwelteinflüssen zu vermeiden, wie z.B. Rosterscheinungen an den Permanentmagneten.

Erfindungsgemäß wird zur Fixierung dieser Permanentmagnete in den Ausnehmungen im Blechpaket des Rotors ein Verfahren beschrieben, bei dem es möglich ist, eine Verklebung der Permanentmagnete in ihren jeweiligen Magnettaschen vorzunehmen, ohne dass ein aufwändiger Reinigungsprozess an den Stirnseiten des Blechpakets der Magnettasche bzw. des Werkzeugs erforderlich ist.

Eine Ausnehmung im Blechpaket des Rotors weist eine Magnettasche zur Aufnahme eines Permanentmagneten, als auch an die Magnettasche anschließende Flusssperren auf.

Vorteilhafterweise wird dabei u.a. vermieden, dass die außenliegenden Flusssperren der Ausnehmungen mit Kleber befüllt werden. Es wird somit vermieden, dass Kleber an den Stirnseiten des Blechpakets sowie an den beiden Flusssperrenseiten des Permanentmagneten Kleber austritt. Dies begünstigt eine exakte Dosierung des Klebers pro Ausnehmung, bzw. Magnettasche und damit pro Rotor.

Ein Vorwärmen des Klebers und/oder des Blechpakets ist ebenfalls nicht erforderlich, da der Kleber unter Bewegung des Permanentmagneten eingebracht wird und somit ein konturbedingter hydrodynamischer Effekt genutzt wird. Außerdem wird eine gleichmäßige flächige Klebeschicht zwischen zumindest einer Magnetfeldseite und der dazu korrespondieren Seite der Magnettasche gewährleitet.

Das erfindungsgemäße Verfahren zum Verkleben dieser Permanentmagnete läuft dabei folgendermaßen ab.

Der erfindungsgemäße Permanentmagnet wird zunächst von einer Seite an die Magnettasche einer Ausnehmung angesetzt, insbesondere ca. 2 bis 3 mm eingeschoben. Somit ist diese Seite - Einschubseite - der Magnettasche durch die Kontur der Förderseite des Permanentmagneten abgedeckt, wobei lediglich die Flusssperren der Ausnehmung frei sind und frei bleiben. Eine zusätzliche Silikonabdeckung zur Abdichtung ist nicht erforderlich.

Nun wird ein Kleber oder eine Vergussmasse auf die Förderseite des Permanentmagneten aufgebracht. Dies kann durch eine oder mehrere Düsen, vorzugsweise im mittleren Bereich der Förderseite des Permanentmagneten geschehen. Auf der Förderseite ist dort auf der Oberfläche des Permanentmagneten und daran anschließender Bereiche, zumindest einer in dem Magnetfluss befindlichen Seite, also entweder Luftspaltseite und/oder Achsseite eine abschnittsweise Materialabtragung bzw. Gestaltung bei der Herstellung des Permanentmagneten vorhanden. Durch diese Formgebung wird sich ein auf die Förderseite des Permanentmagneten gegebener Kleber bei axialer Bewegung des Permanentmagneten in der Magnettasche über die Spalte, insbesondere Fügespalte zwischen der der Luftspaltseite und der Innenseite der Magnettasche und der Achsseite und der Innenseite der Magnettasche verteilen, ohne die Flusssperren zu benetzen.

Durch diese speziellen Konturen wird der Kleber in die Spalte eingebracht, die eine Verteilung des Klebers zwischen die Luftspaltseite und Achsseite des Permanentmagneten und deren korrespondierenden Innenseiten der Magnettasche bei weiterer axialer Verschiebung des Permanentmagneten in die Magnettasche bewirken.

Durch die axiale Bewegung des Permanentmagneten in der Magnettasche kommt es zu einer vorgebbaren Kleberverteilung, die in Abstimmung vom Volumenstrom des Klebers und der axialen Fügegeschwindigkeit des Permanentmagneten in der Magnettasche erfolgt. Mit Einstellung der Viskosität des Klebers kann ebenfalls Einfluss auf die Verteilung des Klebers in der Fase und damit der flächigen Beaufschlagung des Klebers, insbesondere auf der Luftspaltseite und Achsseite des Permanentmagneten Einfluss genommen werden.

In einem Ausführungsbeispiel reicht die Kontur an der Förderseite nicht bis an die den Flusssperren zugewandten Seitenflächen des Permanentmagneten (Flusssperrenseiten), sondern ist mit einem zumindest schmalen Steg jeweils abgeschlossen. Damit wird vermieden, dass auch bei axialer Bewegung des Permanentmagneten in die Magnettasche der Kleber seitlich in die Flusssperren läuft und nicht mehr für den Klebevorgang zur Verfügung stehen würde.

In einem weiteren Ausführungsbeispiel der Permanentmagnete reicht die Kontur an der Förderseite des Permanentmagneten bis an die den Flusssperren zugewandten Seitenflächen des Permanentmagneten (Flusssperrenseiten).

Durch zumindest eine auf der Förderseite des Permanentmagneten verlaufenden Mulde bzw. Querkanal, in die die Kleberzufuhr zumindest überwiegend erfolgt, ist es möglich mit nur einer Düse den Klebevorgang mit ausreichend Kleber zu versorgen. Dies ist insbesondere dann wichtig, wenn die Magnethöhe, also der Abstand zwischen den Magnetfeldseiten größer 4 mm ist.

Diese Mulde bzw. dieser Querkanal müssen dabei nicht von einer Magnetfeldseite zur anderen reichen, es sind auch reduzierte Längen möglich. Ebenso kann sich der Querschnitt der Mulde bzw. des Querkanals von einer Magnetfeldseite zur anderen Magnetfeldseite verändern, bzw. eine andere Kontur und/oder Querschnittfläche aufweisen.

Andere Geometrien von Förderseite der Permanentmagneten und/oder daran anschließender Bereiche wie der Magnetfeldseiten zur Verteilung des Klebers sind ebenso möglich.

So kann auch angedacht werden, die beiden Fasen und/oder beide Magnetfeldseiten mit unterschiedlichen Klebermengen zu versorgen, indem beispielsweise die Fasen unterschiedlich gestaltet sind. So können die den Innenseiten der Magnettasche zugewandten Magnetfeldseiten mit unterschiedlichen Klebervolumina versorgt werden, z.B. kann die Luftspaltseite des Permanentmagneten nur 30% Klebervolumen aufweisen, während die Achsseite des Permanentmagneten 70% des Klebervolumens aufweist.

Durch dieses Verfahren wird zusammen mit den erfindungsgemäßen Permanentmagneten somit der Kleber in vorgebbaren Mengen mittels eines hydrodynamischen Effektes zwischen Permanentmagnet und Innenseite der Magnettasche in der Magnettasche platziert und fixiert. Die Kontur auf der Förderseite des Permanentmagneten, insbesondere die Fasen am Permanentmagneten bilden eine Art Depot, dessen "Füllstand" u.a. durch die Verschiebegeschwindigkeit des Permanentmagneten in der Magnettasche beeinflusst wird.

Somit werden Blasenbildung oder Fehlstellen an den Klebeflächen zwischen einer Magnetfeldseite und den dazu korrespondierenden Seiten der Magnettasche des Blechpaketes vermieden.

Ein Weglaufen des Klebers an den Außenseiten des Permanentmagneten in die Flusssperren wird durch die spezielle Kanten- bzw. Fasengeometrie auf der Förderseite des Permanentmagneten, die nicht bis zu den Flusssperrenseiten ausgebildet wird, vermieden. Die Flusssperren bleiben erfindungsgemäß somit frei von Klebstoff. Eine Abdichtung am Werkzeug der Vorrichtung, mittels Silikon, insbesondere an der Einschubseite ist nicht erforderlich. Säuberungsaufwand am Werkzeug, sowie ein Abstreichen an der der Einschubseite gegenüberliegenden Seite der Ausnehmung wird nicht benötigt.

Das Befüllen/Bereitstellen des Klebers in der Magnettasche an der Förderseite des Permanentmagneten kann während des axialen Einschiebens der Permanentmagnete kontinuierlich fortgeführt werden. Dabei kann die Düse und das den Permanentmagneten bewegende Einschiebeelement parallel bzw. synchron bewegt werden, so dass das notwendige Klebervolumen im Spalt bzw. den Spalten zwischen Innenseite der Magnettasche und den Magnetfeldseiten gleichmäßig beibehalten werden kann.

Um ein Vorauseilen des Permanentmagneten aufgrund seiner magnetischen Zugkräfte in der Magnettasche, insbesondere in axialer Richtung zu vermeiden, können Gegenhalter der Vorrichtung auf der Förderseite des Permanentmagneten oder Klammern auf der Schubseite des Permanentmagneten vorgesehen werden, so dass der Permanentmagneten während seiner Bestückung in Achsrichtung im Werkzeug der Vorrichtung fixiert ist.

Dies gestattet einen gleichmäßigen Schiebevorgang in vorgebbarer Geschwindigkeit, ohne dass der Permanentmagnet in der Magnettasche unerwünschte axiale Eigenbewegungen durchführt.

Ist der Permanentmagnet komplett oder nahezu komplett in die Magnettasche eingeschoben, wird das Fördern des Klebestoffes aus der Düse abgebrochen. Der überstehende Kleber-Tropfen schwemmt schließlich die Fase aus und es kommt nicht zu einem Überstehen von Kleber über die Paketoberseite bzw. Stirnseite des Blechpakets/Teilblechpakets.

Um ein an den Bestückungsvorgang zeitlich direkt anschließendes Handling der mit Permanentmagneten bestückten Rotorpakete ohne Unterbrechungszeiten zu gewährleisten, besteht die Möglichkeit, nach dem Bestückungsvorgang der Magnettasche mit dem Permanentmagneten - oder aufgeteilt in zwei zeitlich getrennte Abschnitte am Anfang und Ende des Bestückungsvorganges - die axialen Enden der Magnettasche, vor allem also die Klebefläche mit UV-Licht zu beaufschlagen.

Dazu wird der Kleber mit UV-härtenden Substanzen ausgestattet. Der mit Permanentmagneten bestückte Rotor ist für die weitere Handhabe geeignet und kann bei Raumtemperatur komplett durchhärten.

In einer weiteren Ausführung wird speziell mit einer eigenen Düse zumindest für einen vorgebbaren Abschnitt am Anfang und Ende des Vorganges Kleber mit UV-härtenden Substanzen verabreicht. Ansonsten wird im axial mittleren Abschnitt der Magnettasche die Düse mit Kleber ohne UV-härtenden Substanzen verwendet.

Das erfindungsgemäße Verfahren lässt sich bei Polen des Rotors umsetzen, die eine oder mehrere Ausnehmungen pro Pol aufweisen, und deren Anordnung jeweils tangential, V-Förmig, U-Förmig oder Doppel-U-Förmig etc. ausgeführt ist.

Gemäß oben beschriebener Verfahrensschritte wird bei jeder Ausnehmung des Blechpakets des Rotors so verfahren. Nach Bestückung einer Ausnehmung wird der Rotor um einen vorgebbaren Winkel gedreht, um die nächste Ausnehmung des Blechpakets erfindungsgemäß zu bestücken.

Je nach verwendeter Vorrichtung können auch mehrere Ausnehmungen eines Blechpakets gleichzeitig bestückt werden. Ebenso ist es möglich mehrere Blechpakete gleichzeitig zu bestücken.

Die axiale Länge der Permanentmagneten entspricht der axialen Länge eines Blechpaketes. Um auch axial längere Blechpakete des Rotors zu erhalten, können diese auch mehreren Einzelblechpaketen zusammengesetzt werden. Die ermöglicht den Rotor gestaffelt aufzubauen. Also jedes Teilblechpaket ist gegenüber dem axial folgenden Teilblechpaket, um einen vorgebbaren Winkel in Umfangsrichtung zu verdrehen.

Die Permanentmagnete können gemäß diesem Verfahren magnetisiert, teilmagnetisiert oder unmagnetisiert in die Magnettaschen eingeschoben werden und dann später ggf. komplett aufmagnetisiert werden.

Die Zuführung der Permanentmagnete erfolgt aus einem Magazin, das so ausgerichtet ist, dass so die eingeschobenen Permanentmagnete generell an der radialen Außenseite der Magnettasche anliegen.

Das Anhaften des einzuschiebenden Permanentmagneten an der Außenseite der Magnettasche kann durch eine Haltekontur der Magnettasche im Rotorblech gesichert werden. Dabei sind Halteelemente an den Rändern der Magnettasche zu den Flusssperren vorgesehen, die dem Außenumfang des Rotors - also dem Luftspalt der dynamoelektrischen Maschine - zugewandt sind.

Diese Halteelemente erhöhen zusätzlich auch die Kurzschlussfestigkeit der dynamoelektrischen Maschine, insbesondere einer permanenterregten Synchronmotoren mit vergrabenen Permanentmagneten.

Einen derartig verstärkenden Effekt kann man stattdessen oder ergänzend auch durch werkzeugtechnische Maßnahmen erreichen. Dies kann ein magnetischer Kern zur Schließung des magnetischen Kreises, oder zusätzliche elektromagnetische Spulen sein, die ein Ziehen der Permanentmagnete an die Außenseite der Magnettasche bewirken.

Das Anliegen der Permanentmagnete ist in der Hinsicht von Vorteil, dass die im Betrieb der dynamoelektrischen Maschine wirkende Fliehkraft auf die Permanentmagnete durch die Blechgeometrie besser abgestützt wird, oder auch im Fertigungsprozess die Verteilung des Klebers zum festgelegten Spalt hin ausgerichtet sein kann.

Ein Vorwärmen des Pakets ist nicht erforderlich, da bei dieser Klebemethode der Kleber unter hydrodynamischer Druckbildung in die Klebespalte eingekeilt wird, so dass gegenüber herkömmlichen Verfahren die hohe Abhängigkeit der Funktionen Schwerkraftwirkung, Kapillarwirkung und Viskosität des Klebers nicht mehr gegeben ist.

Die Merkmale der bisher und im folgenden beschriebenen Ausführungen können beliebig kombiniert werden. Ebenso sind auch Einzelmerkmale der jeweiligen Ausführungen mit Einzelmerkmalen einer anderen Ausführung kombinierbar, ohne das Wesen der Erfindung zu verlassen.

Die Erfindung sowie weitere vorteilhafte Ausgestaltungen der Erfindung werden anhand prinzipiell dargestellter Ausführungsbeispiele näher erläutert, darin zeigen:
- FIG 1: prinzipieller Längsschnitt einer dynamoelektrischen Maschine,
- FIG 2 bis FIG 6: Ausführungsformen erfindungsgemäßer Permanentmagnete,
- FIG 7 bis FIG 11: Verfahrensschritte des erfindungsgemäßen Herstellungsverfahrens,
- FIG 12, 13: Teilquerschnitte eines Rotors.

Es sei angemerkt, dass sich Begriffe wie "axial", "radial", "tangential" etc. auf die in der jeweiligen Figur bzw. im jeweils beschriebenen Beispiel zum Einsatz kommende Achse 6 beziehen. Mit anderen Worten beziehen sich die Richtungen axial, radial, tangential stets auf eine Achse 6 des Rotors 9 und damit auf die entsprechende Symmetrieachse des Stators 8. Dabei beschreibt "axial" eine Richtung parallel zur Achse 7, "radial" beschreibt eine Richtung orthogonal zur Achse 6, auf diese zu oder auch von ihr weg, und "tangential" ist eine Richtung, die in konstantem radialem Abstand zur Achse 6 und bei konstanter Axialposition kreisförmig um die Achse 6 herum gerichtet ist. Der Ausdruck "in Umfangsrichtung" ist mit "tangential" gleichzusetzen.

In Bezug auf eine Fläche, bspw. eine Querschnittsfläche, beschreiben die Begriffe "axial", "radial", "tangential" etc. die Orientierung des Normalenvektors der Fläche, d.h. desjenigen Vektors, der senkrecht auf der betroffenen Fläche steht.

Unter dem Ausdruck "koaxiale Bauteile", bspw. koaxiale Komponenten wie Rotor 9 und Stator 8, werden hier Bauteile verstanden, die gleiche Normalenvektoren aufweisen, für die also die von den koaxialen Bauteilen definierten Ebenen parallel zueinander sind. Des Weiteren soll der Ausdruck beinhalten, dass die Mittelpunkte koaxialer Bauteile auf der gleichen Rotations- bzw. Symmetrieachse liegen. Diese Mittelpunkte können jedoch auf dieser Achse ggf. an verschiedenen axialen Positionen liegen und die genannten Ebenen also einen Abstand >0 voneinander haben. Der Ausdruck verlangt nicht zwangsläufig, dass koaxiale Bauteile den gleichen Radius haben.

Der Begriff "komplementär" meint im Zusammenhang mit zwei Komponenten, welche "komplementär" zueinander sind, dass ihre äußeren Formen derart ausgestaltet sind, dass die eine Komponente vorzugsweise vollständig in der zu ihr komplementären Komponente angeordnet werden kann, so dass sich die innere Oberfläche der einen Komponente und die äußere Oberfläche der anderen Komponente idealerweise lückenlos bzw. vollflächig berühren. Konsequenterweise ist also im Falle von zwei zueinander komplementären Gegenständen die äußere Form des einen Gegenstandes durch die äußere Form des anderen Gegenstandes festgelegt. Der Begriff "komplementär" könnte durch den Begriff "invers" ersetzt werden.

Der Übersichtlichkeit wegen werden in den Figuren teilweise in den Fällen, in denen Bauteile mehrfach vorhanden sind, häufig nicht sämtliche dargestellten Bauteile mit Bezugszeichen versehen.

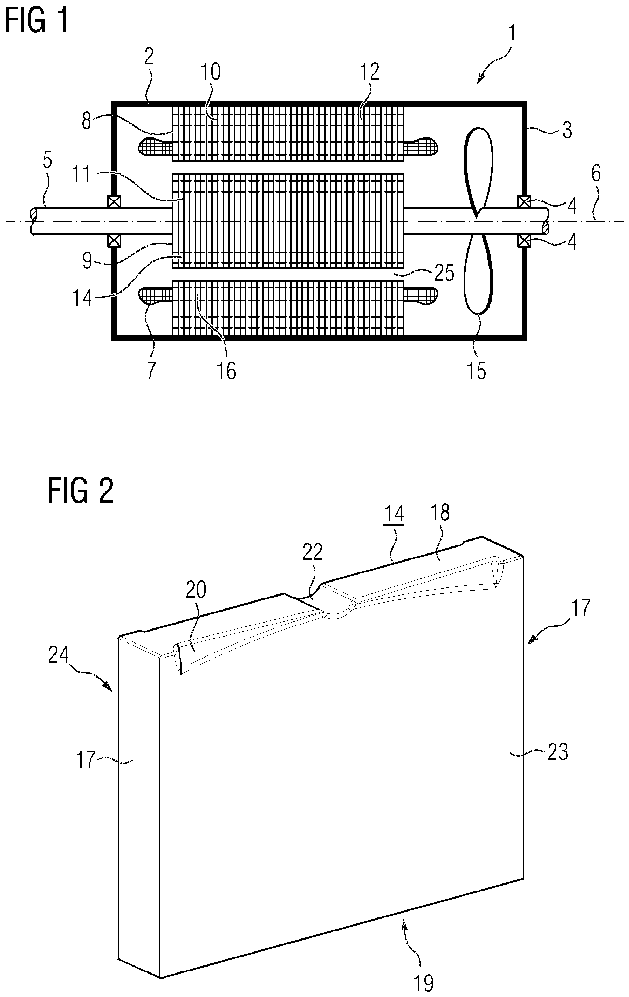

FIG 1 zeigt einen prinzipiellen Längsschnitt einer dynamoelektrischen Maschine 1. Ein Stator 8, mit einem, in im Wesentlichen axial verlaufenden Nuten 16 angeordneten Wicklungssystem 7, ist in diesem Beispiel in einem Gehäuse 2 angeordnet. Über Lagerschilde stützt sich das Gehäuse 2 mittels Lager 4 auf einer Welle 5 ab. Durch einen Luftspalt 25 vom Stator 8 beabstandet, ist ein Rotor 9 vorgesehen, der in im Wesentlichen axial verlaufenden Ausnehmungen 13 Permanentmagnete 14 aufweist. Sowohl die Blechpakete 10, 11 von Stator 8 und Rotor 9 können optional axial verlaufende Kühlkanäle aufweisen, um auf diese Weise einen geschlossenen Innenkühlkreislauf innerhalb des Gehäuses 2 zu ermöglichen. Bei Bestromung des Wicklungssystems 7 des Stators 8 wird durch elektromagnetische Wechselwirkung mit dem Rotor 9 die Welle 5 um eine Achse 6 in Drehung versetzt. Diese Drehung bewirkt einen Antrieb einer nicht dargestellten Arbeitsmaschine und eines Eigenlüfters 15 in dem Gehäuse 2.

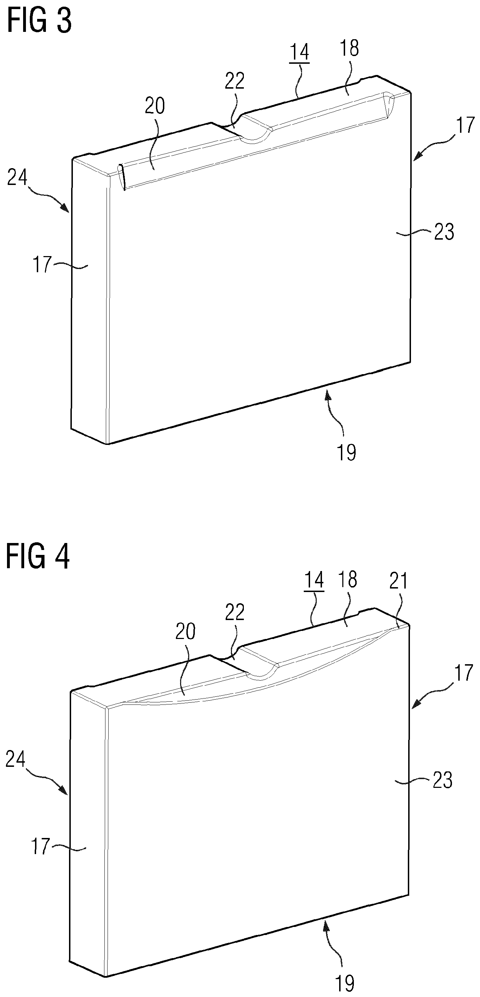

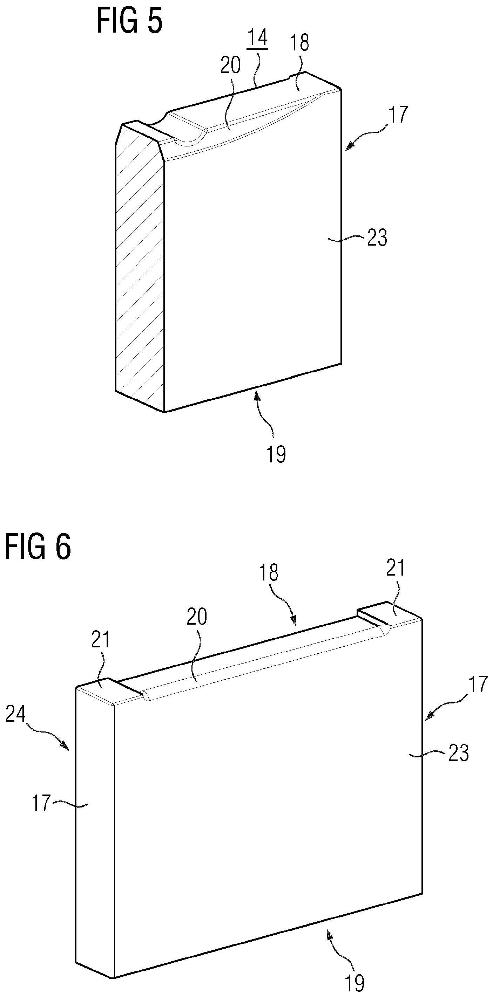

Figuren 2 bis 6 zeigen nicht einschränkende Beispiele von erfindungsgemäß gestalteten Permanentmagneten 14, mit denen das Verfahren besonders vorteilhaft umgesetzt werden kann.

Dabei weist ein Permanentmagnet 14, der eine quaderförmige Grundstruktur aufweist, folgende Seiten auf. Der Permanentmagnet 14 hat eine quaderförmige Grundstruktur mit sechs Seiten. Als Flusssperrenseiten 17 werden die einander gegenüberliegenden Seiten des Permanentmagneten 14 bezeichnet, die im späteren Einsatz im Blechpaket 11 des Rotors 9 zu den Flusssperren 34 weisen. Als Förderseite 18 bzw. Schubseite 19 werden die einander gegenüberliegenden Seiten des Permanentmagneten 14 bezeichnet, die im späteren Einsatz im Blechpaket 11 des Rotors 9 mit ihren Normalenvektoren achsparallel ausgerichtet sind und zu den Stirnseiten des Blechpakets 11 weisen. Als Luftspaltseite 23 bzw. Achsseite 24 werden die einander gegenüberliegenden Seiten des Permanentmagneten 14 bezeichnet, die im späteren Einsatz im Blechpaket 11 des Rotors 9 senkrecht in einem Magnetfluss liegen.

Erfindungsgemäß weisen dabei Abschnitte der Förderseite 18 und sich daran anschließender Bereiche auf zumindest einer in dem Magnetfluss befindlichen Seite, also entweder Luftspaltseite 23 und/oder Achsseite 24 eine abschnittsweise Materialgestaltung bzw. Materialabtragung auf. Dadurch wird die quaderförmige Grundstruktur des Permanentmagneten 14 strömungstechnisch derart formt, dass ein auf die Förderseite 18 gegebener Kleber 29 bei axialer Bewegung des Permanentmagneten 14 in der Magnettasche 40 sich über die Spalte 41, 42 zwischen der Luftspaltseite 23 und der Magnettasche 40 und der Achsseite 24 und der Magnettasche 40 verteilt, ohne die Flusssperren 34 zu benetzen.

Mit anderen Worten - zumindest die Förderseite 18 des Permanentmagneten 14 weist eine derartige hydrodynamische Kontur auf.

Die Kanten bzw. die Abschnitte zwischen Förderseite 18 und zumindest einer Magnetfeldseite 23, 24 weist eine strömungstechnische oder kurvenförmige Gestaltung auf, um bei einem axialen Einschub 30 des Permanentmagneten 14 in die axial verlaufende Ausnehmung 13 eine ausreichende Kleberverteilung zwischen den Magnetfeldseiten 23, 24 und den dazu korrespondierenden Seiten der Magnettaschen 40 im Blechpaket 11 zu erhalten.

Dabei weisen die Kanten der Permanentmagnete 14 in diesem Bereich plane Flächenelemente oder kurvenförmige Übergänge von der Förderseite 18 zu zumindest einer Magnetfeldseite 23, 24 auf.

Für den Einschub der Permanentmagnete 14 in die Magnettasche 40 des Blechpakets 11, wird das Blechpaket 11 vorzugsweise horizontal derart ausgerichtet ist, dass die zu bestückenden Ausnehmungen 13 im Wesentlichen unten angeordnet sind.

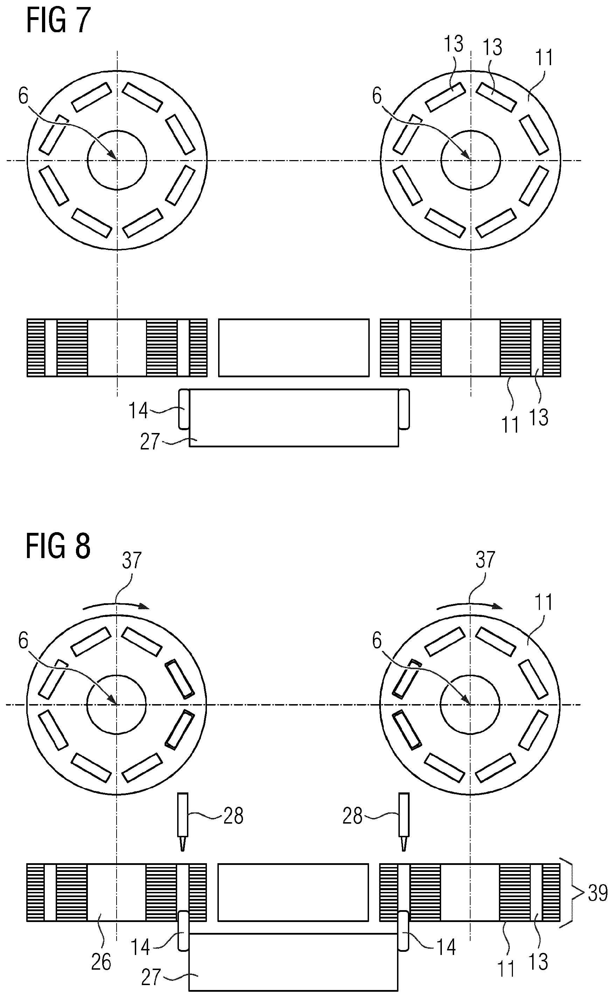

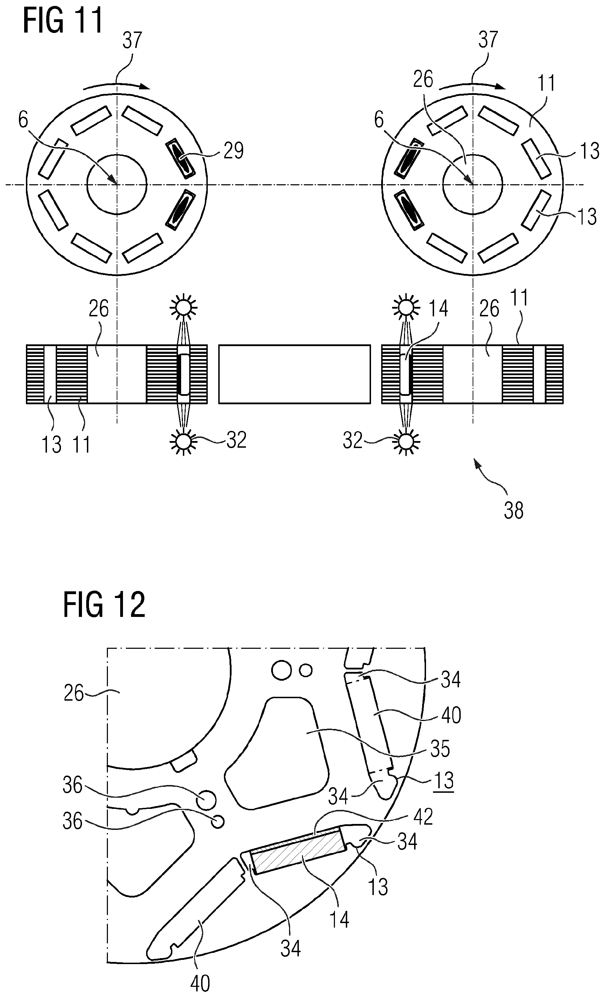

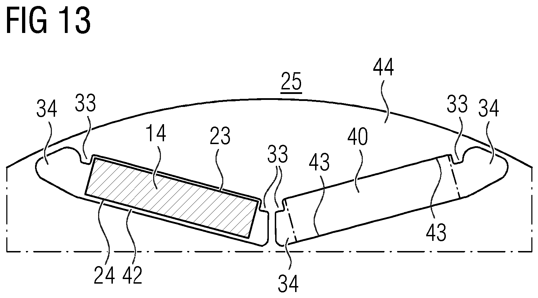

Gemäß dem Verfahren nach den Figuren 7 bis 11 wird eine beispielhafte Vorrichtung zur Durchführung des Verfahrens gezeigt, wobei jede der Figuren einen prinzipiellen Querschnitt und Längsschnitt zweier Blechpakete 11 zeigt. Aus Gründen der Übersichtlichkeit ist jeder Pol 44 nur mit einer tangentialen vereinfachten Ausnehmung 13 dargestellt. Die Ausnehmungen 13 selbst setzen sich, wie FIG 12 und FIG 13 zeigen, aus den Magnettaschen 40 und den Flusssperren 34 und optimalen Halteelementen 33 zusammen. Ebenso kann jeder Pol 44 mehrere Ausnehmungen 13 aufweisen, wie beispielsweise V-Anordnungen, U-Anordnungen oder Doppel-V-Anordnungen.

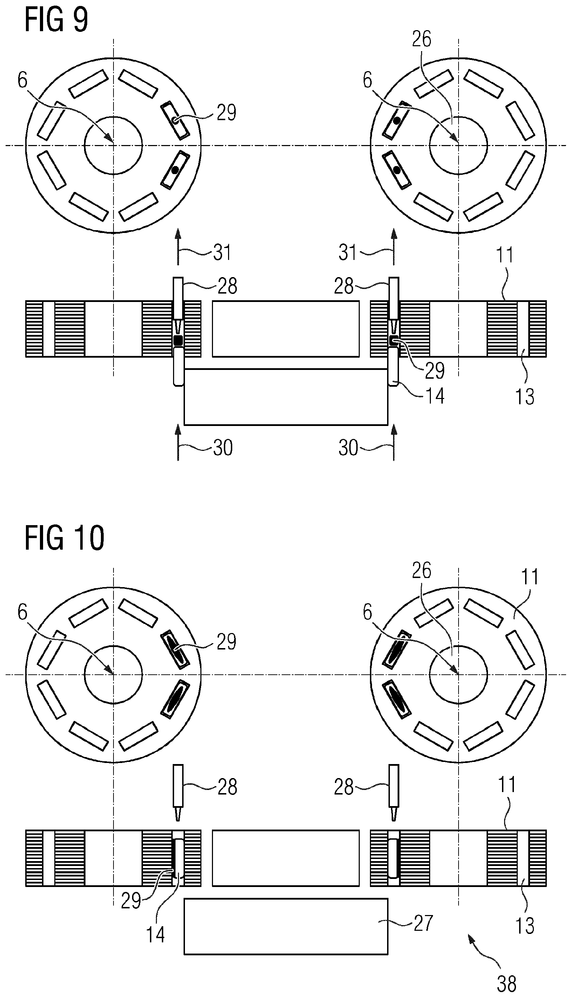

Zunächst wird der Permanentmagnet 14 ca. 2 bis 3 mm von einer Stirnseite, mit der Förderseite 18 voraus, in seine Magnettasche 40 eingeschoben (FIG 8). Somit ist diese Einschubseite der Magnettasche 40 durch die Kontur des Permanentmagneten 14 abgedeckt. Die Flusssperren 34 der Ausnehmung 13 bleiben dabei frei. Eine zusätzliche Silikonabdeckung ist nicht erforderlich. Nun wird mittels einer oder mehrerer Düsen 28 Kleber 29 auf die Förderseite 18 des Permanentmagneten 14 aufgebracht. Optimalerweise im Mittelpunkt dieser Fläche. An der Förderseite 18 und optional an den daran anschließenden Bereichen der Luftspaltseite 23 und/oder Achsseite 24 sind spezielle Konturen eingebracht, die eine Verteilung des Klebers 29 auf Luftspaltseite 23 und Achsseite 24 bei weiterer axialer Verschiebung des Permanentmagneten 14 in die Magnettasche 40 bewirken. Düse 28 und Permanentmagnet 14 bewegen sich idealerweise synchron in axialer Richtung (FIG 9, FIG 10).

Mit anderen Worten: der axiale Vorschub 31 von Düse 28 und der axiale Vorschub 30 des Permanentmagnetes 14 sind gleich. Dies kann u.a. dadurch gewährleistet werden, indem ein optionaler Gegenhalter der Vorrichtung auf der Förderseite 18 des Permanentmagneten 14 vorgesehen wird, um ein Vorauseilen des Permanentmagneten 14 aufgrund seiner magnetischen Zugkräfte in der Magnettasche 40, insbesondere in axialer Richtung zu vermeiden.

Die Konturen des Permanentmagneten 14 an der Förderseite 18 können gerade oder ovale Fasen 20 sein. Zusätzlich, ggf. mit einem quer zum Permanentmagneten 14 angeordneten Kanal oder einer Mulde 22, können dadurch beispielsweise die Fasen 20 von der Förderseite 18 zu den Magnetfeldseiten 23, 24 optimal mit Klebstoff 29 versorgt werden.

Durch diese Mulde ist es u.a. möglich mit nur einer Düse 31 pro Magnettasche 40 den Klebevorgang mit ausreichend Kleber 29 zu versorgen. Dies ist insbesondere wichtig, wenn die Magnethöhe (Abstand der beiden Magnetfeldseiten) kleiner 4 mm beträgt.

Andere Geometrien der Gestaltung der Förderseite 18 und deren anschließenden Bereiche der Magnetfeldseiten 23, 24 zur Verteilung des Klebers 29 sind möglich. So können die beiden Fasen 20 unterschiedlich gestaltet sein, um so die beiden Magnetfeldseiten 23, 24 mit unterschiedlichen Mengen des Klebers 29 zu versehen. So kann beispielsweise gemäß FIG 13 der Spalt 41 auf der Luftspaltseite 23 des Permanentmagneten 14 nur mit 30% Klebervolumen versorgt werden, während der Spalt 42 auf der Achsseite 24, 70% des Klebervolumens erhält.

Der Kanal bzw. die Mulde 22 auf der Förderseite 18 des Permanentmagneten 14 kann auch geneigt ausgeführt oder zu einer Seite verschlossen sein, um eine ordnungsgemäße Verteilung des Klebers 29 zu gewährleisten.

Somit kommt es zu einer Kleberverteilung, die in Abstimmung vom Volumenstrom des Klebers 29 und der axialen Fügegeschwindigkeit des Permanentmagneten 14 in die Magnettasche 40 erfolgt. Mit Einstellung der Viskosität des Klebers 29 kann ebenfalls Einfluss auf die Verteilung des Klebers 29 in der Fase 20 und damit der flächigen Beaufschlagung (Magnetfeldseite 23, 24 zur Innenseite 43 Magnettaschen 40) Einfluss genommen werden.

Wichtig ist, dass die Fase 20 nicht bis an die Seitenflächen des Permanentmagneten 14, also Flusssperrenseiten 17 reicht. Damit wird vermieden, dass bei axialer Bewegung des Permanentmagneten 14, der Kleber 29 seitlich nicht in die Flusssperren 34 weglaufen kann.

Dieser verbleibende Steg 21 vermeidet somit das Weglaufen des Klebers 29 in die Flusssperren 34.

Das Befüllen der Magnettasche 40 mit darin befindlichem und axial bewegten Permanentmagneten 14 kann also kontinuierlich für jede Magnettasche 40 fortgeführt werden. Nach dem jeweiligen Bestücken der Magnettaschen 40 wird das Blechpaket 11 um einen vorgebbaren Winkel 37 weitergedreht, um die folgenden Magnettaschen 40 zu bestücken. Dabei kann die Düse 28 und das Einschiebeelement, insbesondere als Teil einer Bestückungsvorrichtung 38 für den Permanentmagneten 14 jeweils synchron, äquidistant bewegt werden, so dass das Klebervolumen in den Spalten zwischen Magnetfeldseiten 23, 24 und den Innenseiten 41, 42 der Magnettasche 40 gleichmäßig gehalten wird.

Um ein Vorauseilen des Permanentmagneten 14 aufgrund seiner magnetischen Zugkräfte im Blechpaket 11 zu vermeiden, können Gegenhalter in der Bestückungsvorrichtung 38 auf der Förderseite 18 des Permanentmagneten 14 vorgesehen werden, so dass der Permanentmagneten 14 in Achsrichtung im Werkzeug während der Bestückung fixiert ist.

Ist der Permanentmagnet 14 vollends in die Magnettasche 40 eingeschoben, wird das Fördern des Klebestoffes 29 aus der Düse 28 abgebrochen. Ein eventuell überstehender Kleber-Tropfen schwemmt schließlich die Fase 20 aus und ein axiales Überstehen von Kleber 29 über die Stirnseite des Blechpakets 11 wird vermieden.

Um ein direktes daran zeitlich anschließendes Weiterbearbeiten des Rotors 9 zu ermöglichen, kann optional jede Magnettasche 40 nach bestücken mit ihrem Permanentmagneten 14, an ihren Stirnseiten, insbesondere an den Klebeflächen mit UV-Licht beaufschlagt. Gemäß FIG 11 erfolgt die Lichthärtung 32 zeitgleich oder hintereinander. Ebenso können auch alle Stirnseiten der Magnettaschen 40 eines Rotors 9 zeitgleich gehärtet werden. Dazu ist der Kleber 29 mit UV-härtenden Substanzen auszustatten. Der Rotor 9 ist damit für die weiteren Handhabungen geeignet und kann bei Raumtemperatur anschließend komplett durchhärten.

Die Zuführung der Permanentmagneten 14 erfolgt von einem Magazin 27 aus, so dass optimalerweise die Permanentmagneten 14 generell an der radialen Außenseite der Magnettasche 40 anliegen und der Spalt 41 zwischen Luftspaltseite 23 des Permanentmagneten 14 und Innenseite 41 der Magnettasche 40 minimiert wird.

Die Permanentmagnete 14 können gemäß diesem Verfahren magnetisiert, teilmagnetisiert oder unmagnetisiert in die Magnettaschen 40 eingeschoben werden und dann später ggf. komplett aufmagnetisiert werden.

Die Zuführung der Permanentmagnete erfolgt - wie bereits beschrieben - aus dem Magazin 27, das so ausgerichtet ist, dass die einzuschiebenden Permanentmagnete 14 generell an der dem Außenumfang zugewandten Innenseite 43 der Magnettasche 40 anliegen.

Das Anhaften des einzuschiebenden Permanentmagneten 14 an der Außenseite der Magnettasche 40 kann durch eine Haltekontur der Magnettasche 40 bereits im Blechschnitt des Rotorblechpakets 11 gesichert werden. Dabei sind Haltelemente 33 an den Rändern der Magnettasche 40 zu den Flusssperren 24 vorgesehen, die dem Außenumfang des Rotors 9 - also dem Luftspalt 25 der dynamoelektrischen Maschine 1 - zugewandt sind. Diese Halteelemente 33 erhöhen zusätzlich auch die Kurzschlussfestigkeit einer dynamoelektrischen Maschine 1, insbesondere einer permanenterregten Synchronmaschine mit vergrabenen Permanentmagneten 14.

Das Anliegen der Permanentmagnete 14, was u.a. auch durch Gestaltung deren Förderseite 18 beeinflusst werden kann, ist in der Hinsicht von Vorteil, dass die im Betrieb der dynamoelektrischen Maschine 1 wirkende Fliehkraft auf die Permanentmagnete 14 durch die Blechgeometrie besser abgestützt werden kann. Außerdem wird dadurch während des Fertigungsprozesses des Rotors 9 die Verteilung des Klebers 29 zu einer damit festgelegten Dimension des Spaltes 41 hin ausgerichtet.

Die Permanentmagnete 14 (Luftspaltseite 23) liegen vorteilhafterweise an der Außenseite der Magnettasche 40 direkt an.

Dabei wird unter direkter Anlage verstanden, dass die Permanentmagnete direkt am Blech anliegen - lediglich geringe Unebenheiten im µm-Bereich sind vorhanden.

Auf der Achsseite der Magnettasche ist ein Abstand Permanentmagnet-Blech von ca. 0,15 bis 0,25 mm vorhanden.

Bei diesem Verfahren zur Herstellung eines Rotors 9 mit vergrabenen erfindungsgemäßen Permanentmagneten 14, wird der Kleber 29 mittels seines sich daraus ergebenden hydrodynamischen Effektes in den Fügespalten 41, 42 zwischen den Innenseiten 43 der Magnetfeldtaschen 40 und den Magnetfeldseiten 23, 24 platziert und fixiert. Die Fasen 20 am Permanentmagneten 14 bilden eine Art Depot des Klebers 29, das während des Befüllungsprozesses in Abhängigkeit des Vorschubes 30 des Permanentmagneten 14 die ausreichende Versorgung mit Kleber 29 gewährleistet.

Somit werden auch Blasenbildung oder Fehlstellen an den Klebeflächen zwischen Magnetfeldseiten 23, 24 und dazu korrespondierenden Innenseiten 43 der Magnettaschen 40 vermieden. Ein Weglaufen des Klebers 29 in die Flusssperren der Ausnehmungen wird durch die spezielle Kontur, insbesondere Stege 21 vermieden. Die Flusssperren 34 bleiben erfindungsgemäß somit frei von Klebstoff 29.

Eine Abdichtung am Werkzeug der Bestückungsvorrichtung 38, mittels Silikon, insbesondere an den Stirnseiten der Magnettaschen 40 ist nicht erforderlich. Säuberungsaufwand am Werkzeug, sowie ein Abstreichen der Stirnseiten ist nicht notwendig.

Ein Vorwärmen des Blechpakets 11 des Rotors 9 ist nicht erforderlich, da bei dieser Klebemethode der Kleber 29 unter hydrodynamischer Druckbildung in die Klebespalte/Fügespalte 41, 42 eingekeilt wird und die bisherige hohe Abhängigkeit der Funktionen Schwerkraftwirkung, Kapillarwirkung und Viskosität des Klebers bei der Fixierung der Permanentmagnete in der Magnettasche 40 nicht mehr vorhanden ist.

FIG 12 zeigt einen beispielhaften Teilquerschnitt eines Rotors 9, bei dem zur Erläuterung der Sachverhalte nur eine Magnettasche 40 mit einem Permanentmagneten 14 versehen ist. Der Rotor 9 weist außerdem Trägheitsausnehmungen 35 und Kühlkanäle 36 auf.

FIG 13 zeigt einen Pol 44 mit V-förmig angeordneten Ausnehmungen 13, bei lediglich zur Anschaulichkeit auch nur eine Magnettasche 40 mit einem Permanentmagneten 14 versehen ist.

Die Spalte 41 und 42 können dabei unterschiedlich ausgeprägt sein.

Um nun auch axial längere Rotoren 9 für dementsprechende dynamoelektrische Maschinen 1 bereitstellen zu können, können diese mit Permanentmagneten 14 bestückten Blechpakete 11 axial hintereinander angeordnet, insbesondere auch der Welle 5 drehfest befestigt werden. Die einzelnen Blechpakete 11 können dabei um einen vorgebbaren Winkel gegeneinander in Umfangsrichtung versetzt angeordnet sein, um so eine Staffelung der Pole 44 des Rotors 9 über die gesamte axiale Länge zu erhalten. Dies kann die Drehmomentwelligkeit reduzieren.

Derartige Rotoren 9 werden vor allem in dynamoelektrischen Maschinen 1, wie beispielsweise permanenterregten Synchronmaschinen eingesetzt, die vor allem im industriellen Umfeld betrieben werden. Dabei sind sie als Antriebe von Pumpen, Lüfter, Verdichter, Kompressoren, Rollgängen, Förderanlagen vorgesehen, die eine sehr lange kontinuierliche Betriebsdauer aufweisen. Derartige dynamoelektrischen Maschinen 1 sind auch bei Traktionsantrieben wie Miningfahrzeugen, E-Bussen, Straßenbahnen oder Zügen einsetzbar, um u.a. durch die Erhöhung der Gegenfeldstabilität einen zuverlässigeren Betrieb zu gewährleisten.

Grundsätzlich sind derartige dynamoelektrischen Maschinen 1 als Motoren oder Generatoren einsetzbar.

### Bezugszeichenliste

- 1: dynamoelektrische Maschine
- 2: Gehäuse
- 3: Lagerschild
- 4: Lager
- 5: Welle
- 6: Achse
- 7: Wicklungssystem
- 8: Stator
- 9: Rotor
- 10: Blechpaket Stator
- 11: Blechpaket Rotor
- 12: Kühlkanal Stator
- 13: Ausnehmung Rotor der Permanentmagnete
- 14: Permanentmagnet
- 15: Eigenläufer
- 16: Nuten Stator
- 17: Seitenfläche Permanentmagnete (Flusssperren zugewandt)
- 18: Förderseite des Permanentmagneten
- 19: Schubseite des Permanentmagneten
- 20: Fase
- 21: Steg
- 22: Querkanal
- 23: Luftspaltseite des Permanentmagneten
- 24: Achsseite des Permanentmagneten
- 25: Luftspalt
- 26: Blechpaketbohrung Rotor
- 27: Magazin
- 28: Düse
- 29: Kleber
- 30: Vorschub Permanentmagnet
- 31: Vorschub Düse
- 32: Lichthärtung
- 33: Halterungen
- 34: Flusssperre
- 35: Trägheitsausnehmung
- 36: Kühlkanal Rotor
- 37: Drehrichtung
- 38: Bestückungsvorrichtung
- 39: axiale Höhe Blechpaket Rotor
- 40: Magnettasche
- 41: Spalt zwischen Luftspaltseite PM und Innenseite Magnettasche
- 42: Spalt zwischen Achsseite PM und Innenseite Magnettasche
- 43: Innenseite Magnettasche
- 44: Pol

## Patentansprüche

1. Verfahren zur Herstellung eines Rotors (9) mit vergrabenen Permanentmagneten (14) mit einer, insbesondere quaderförmigen Grundstruktur für einen Rotor (9) einer dynamoelektrischen Maschine (1),
wobei axial verlaufende, umfänglich geschlossene Ausnehmungen (13) eines Blechpaketes (11) des Rotors (9), eine Magnettasche (40) und Flusssperren (34) aufweisen,
wobei der Permanentmagnet (14) mit zwei zu Flusssperren (34) weisenden gegenüberliegenden Flusssperrenseiten (17), zwei zu Stirnseiten weisenden gegenüberliegenden Seiten einer Förderseite (18) und einer Schubseite (19) und zwei Magnetfeldseiten einer Luftspaltseite (23) und einer Achsseite (24), versehen ist,
wobei Abschnitte der Förderseite (18) und/oder daran anschließender Bereiche zumindest einer in dem Magnetfluss befindlichen Seite, wie der Luftspaltseite (23) und/oder Achsseite (24), abschnittsweise kurvenförmige/strömungstechnische Gestaltungen aufweisen,
wobei unter Zugabe von Kleber (29) an die Förderseite (18) des Permanentmagneten (14), dieser mit der Förderseite (18) voraus jeweils axial in die Magnetasche (40) eingeschoben wird und dort in der Magnettasche (40) verklebt wird,
wobei ein auf die Förderseite (18) gegebener Kleber (29) bei axialer Bewegung des Permanentmagneten (14) in der Magnettasche (40) sich über die Spalte (41,42) zwischen der Luftspaltseite (23) und der Magnettasche (40) und der Achsseite (24) und der Magnettasche (40) verteilt, ohne die Flusssperren (34) zu benetzen.

2. Verfahren zur Herstellung eines Rotors (9) mit vergrabenen Permanentmagneten (14) nach Anspruch 1, **dadurch gekennzeichnet, dass** die Zugabe von Kleber (29) pro Magnettasche (40) über zumindest eine Düse (28) erfolgt, die zumindest abschnittsweise in der Magnettasche (40) mit dem einzuschiebenden Permanentmagneten (14) synchron und äquidistant bewegt wird.

3. Verfahren zur Herstellung eines Rotors (9) mit vergrabenen Permanentmagneten (14) nach Anspruch 1 oder 2, **dadurch gekennzeichnet, dass** der Fügespalt (41) zwischen Luftspaltseite (23) des Permanentmagneten (14) und korrespondierender Innenseite (43) der Magnettasche (40), über Gestaltung der Förderseite (18) des Permanentmagneten (14) und/oder Haltelemente (33) auf der dem Außenumfang des Rotors (9) zugewandten Seite der Magnettasche (40) und/oder externe Magnetfelder eingestellt wird.

4. Verfahren zur Herstellung eines Rotors (9) mit vergrabenen Permanentmagneten (14) nach einem oder mehreren der vorhergehenden Ansprüche, **dadurch gekennzeichnet, dass** die Permanentmagnete (14) vorher magnetisiert oder zumindest teilmagnetisiert oder unmagnetisiert in die Magnettaschen (40) eingesetzt werden.

5. Verfahren zur Herstellung eines Rotors (9) mit vergrabenen Permanentmagneten (14), mit zwei oder mehreren, nach einem der vorhergehenden Ansprüche, bestückten Blechpakete (11), die axial zu einem Gesamtblechpaket zusammengesetzt werden, derart, dass axial betrachtet, eine Staffelung vorliegt, indem die Blechpakete (11) in Umfangsrichtung betrachtet, um einen vorgebbaren gleichen oder unterschiedlichen Winkel axial versetzt zusammengesetzt werden, wobei der Winkel 0° oder bis zu 30° sein kann.

6. Verfahren zur Herstellung eines Rotors (9) mit vergrabenen Permanentmagneten (14) nach einem oder mehreren der vorhergehenden Ansprüche, **dadurch gekennzeichnet, dass** zumindest eine Kante zwischen einer Magnetfeldseite (23,24) und der Förderseite (18) des Permanentmagneten (14) zumindest abschnittsweise gestaltet ist.

7. Verfahren zur Herstellung eines Rotors (9) mit vergrabenen Permanentmagneten (14) nach einem oder mehreren der vorhergehenden Ansprüche, **dadurch gekennzeichnet, dass** der Bereich bzw. die Kanten zwischen einer Magnetfeldseite (23,24)und der Förderseite (18) des Permanentmagneten (14) zumindest abschnittsweise durch plane Flächen gestaltet ist.

8. Verfahren zur Herstellung eines Rotors (9) mit vergrabenen Permanentmagneten (14) nach einem oder mehreren der vorhergehenden Ansprüche, **dadurch gekennzeichnet, dass** der Bereich bzw. die Kanten zwischen einer Magnetfeldseite (23,24) und der Förderseite (18) des Permanentmagneten (14) zumindest abschnittsweise rundlich gestaltet ist.

9. Verfahren zur Herstellung eines Rotors (9) mit vergrabenen Permanentmagneten (14) nach einem oder mehreren der vorhergehenden Ansprüche, **dadurch gekennzeichnet, dass** die Förderseite (18) des Permanentmagneten (14) zumindest einen Querkanal oder Mulde (22) aufweist.

10. Verfahren zur Herstellung eines Rotors (9) mit vergrabenen Permanentmagneten (14) nach einem oder mehreren der vorhergehenden Ansprüche, **dadurch gekennzeichnet, dass** die Förderseite (18) des Permanentmagneten (14) bzgl. ihrer Längsachse oder Querachse eine symmetrische Kantengestaltung aufweist.

11. Verfahren zur Herstellung eines Rotors (9) mit vergrabenen Permanentmagneten (14) nach einem oder mehreren der vorhergehenden Ansprüche, **dadurch gekennzeichnet, dass** die Förderseite (18) des Permanentmagneten (14) bzgl. ihrer Längsachse oder Querachse eine asymmetrische Kantengestaltung aufweist

12. Verfahren zur Herstellung eines Rotors (9) mit vergrabenen Permanentmagneten (14) nach einem oder mehreren der vorhergehenden Ansprüche, **dadurch gekennzeichnet, dass** die Förderseite (18) des Permanentmagneten (14) an ihren Enden Richtung Flusssperrenseiten (17) Stege (21) ausbildet.

13. Dynamoelektrische Maschine (1), insbesondere permanenterregte Synchronmaschine, mit einem Rotor (9) hergestellt nach einem der vorhergehenden Ansprüche.

14. Verwendung einer dynamoelektrischen Maschine (1), insbesondere permanenterregte Synchronmaschine, nach Anspruch 13 als Antrieb von Pumpen, Lüfter, Verdichter, Kompressoren, Rollgängen, Förderanlagen.

## Claims

1. Method for manufacturing a rotor (9) with buried permanent magnets (14) having a base structure, in particular a cuboid base structure, for a rotor (9) of a dynamoelectric machine (1), wherein axially extending, circumferentially closed recesses (13) of a laminated core (11) of the rotor (9) have a magnet pocket (40) and flux barriers (34), wherein the permanent magnet (14) has two opposing flux-barrier sides (17) facing the flux barriers (34), two opposing sides facing end faces, namely a conveying side (18) and a pushing side (19), and two magnetic-field sides, namely an air-gap side (23) and an axial side (24),
wherein portions of the conveying side (18) and/or adjoining regions of at least one side located in the magnetic flux, such as the air-gap side (23) and/or axial side (24), have sectionally curvilinear/fluid-dynamic designs, wherein, with the addition of adhesive (29) to the conveying side (18) of the permanent magnet (14), the latter is inserted axially into the magnet pocket (40) with the conveying side (18) leading and is adhesively bonded there in the magnet pocket (40),
wherein an adhesive (29) applied to the conveying side (18), during axial movement of the permanent magnet (14) in the magnet pocket (40), is distributed over the gaps (41, 42) between the air-gap side (23) and the magnet pocket (40) and between the axial side (24) and the magnet pocket (40), without wetting the flux barriers (34).

2. Method for manufacturing a rotor (9) with buried permanent magnets (14) according to Claim 1, **characterized in that** the addition of adhesive (29) per magnet pocket (40) takes place via at least one nozzle (28), which is moved at least in sections in the magnet pocket (40) synchronously with and equidistant from the permanent magnet (14) to be inserted.

3. Method for manufacturing a rotor (9) with buried permanent magnets (14) according to either Claim 1 or Claim 2, **characterized in that** the joining gap (41) between the air-gap side (23) of the permanent magnet (14) and the corresponding inner side (43) of the magnet pocket (40) is set by means of the design of the conveying side (18) of the permanent magnet (14) and/or retaining elements (33) on the side of the magnet pocket (40) facing the outer circumference of the rotor (9) and/or external magnetic fields.

4. Method for manufacturing a rotor (9) with buried permanent magnets (14) according to any one or more of the preceding claims, **characterized in that** the permanent magnets (14) are inserted into the magnet pockets (40) in a previously magnetized, or at least partially magnetized, or unmagnetized state.

5. Method for manufacturing a rotor (9) with buried permanent magnets (14), with two or more laminated cores (11) equipped according to any one of the preceding claims, which are assembled axially into an overall laminated core in such a way that, when viewed axially, a staggering is present in that the laminated cores (11), viewed in the circumferential direction, are assembled with an axial offset by a specifiable identical or different angle, wherein the angle may be 0° or up to 30°.

6. Method for manufacturing a rotor (9) with buried permanent magnets (14) according to any one or more of the preceding claims, **characterized in that** at least one edge between a magnetic-field side (23, 24) and the conveying side (18) of the permanent magnet (14) is designed at least in sections.

7. Method for manufacturing a rotor (9) with buried permanent magnets (14) according to any one or more of the preceding claims, **characterized in that** the area or edges between a magnetic-field side (23, 24) and the conveying side (18) of the permanent magnet (14) are designed at least in sections as flat surfaces.

8. Method for manufacturing a rotor (9) with buried permanent magnets (14) according to any one or more of the preceding claims, **characterized in that** the area or edges between a magnetic-field side (23, 24) and the conveying side (18) of the permanent magnet (14) are designed at least in sections to be rounded.

9. Method for manufacturing a rotor (9) with buried permanent magnets (14) according to any one or more of the preceding claims, **characterized in that** the conveying side (18) of the permanent magnet (14) has at least one transverse channel or recess (22).

10. Method for manufacturing a rotor (9) with buried permanent magnets (14) according to any one or more of the preceding claims, **characterized in that** the conveying side (18) of the permanent magnet (14) has a symmetrical edge design with respect to its longitudinal axis or transverse axis.

11. Method for manufacturing a rotor (9) with buried permanent magnets (14) according to any one or more of the preceding claims, **characterized in that** the conveying side (18) of the permanent magnet (14) has an asymmetrical edge design with respect to its longitudinal axis or transverse axis.

12. Method for manufacturing a rotor (9) with buried permanent magnets (14) according to any one or more of the preceding claims, **characterized in that** the conveying side (18) of the permanent magnet (14) forms ribs (21) at its ends in the direction of the flux-barrier sides (17).

13. Dynamoelectric machine (1), in particular a permanently excited synchronous machine, having a rotor (9) manufactured according to any one of the preceding claims.

14. Use of a dynamoelectric machine (1), in particular a permanently excited synchronous machine according to Claim 13, as a drive for pumps, fans, compressors, compressor units, roller lines, and conveyor systems.

## Revendications

1. Procédé de fabrication d'un rotor (9) comportant des aimants permanents (14) enterrés présentant une structure de base notamment parallélépipédique pour un rotor (9) d'une machine dynamoélectrique (1) ; des évidements (13) d'un noyau feuilleté (11) du rotor (9), qui s'étendent axialement et qui sont fermés sur leur pourtour, présentent un logement d'aimant (40) et des barrières de flux (34) ; ledit aimant permanent (14) étant pourvu de deux faces de barrières de flux (17) opposées tournées vers les barrières de flux (34), de deux faces opposées tournées vers les faces d'extrémité, à savoir une face d'insertion (18) et une face de poussée (19), et de deux faces de champ magnétique, à savoir une face d'entrefer (23) et une face axiale (24) ;
des sections de la face d'insertion (18) et/ou de zones d'au moins une face située dans le flux magnétique et qui sont adjacentes à cette dernière, telles que des zones de la face d'entrefer (23) et/ou de la face axiale (24), présentent, par sections, des formes courbes/optimisées pour l'écoulement ; l'aimant permanent (14) étant introduit axialement dans le logement d'aimant (40) par sa face d'insertion (18), ladite face d'insertion (18) ayant reçu l'ajout de colle (29), et étant collé dans ledit logement d'aimant (40) ;
une colle (29) appliquée sur la face d'insertion (18) se répartissant, lors du mouvement axial de l'aimant permanent (14) dans le logement d'aimant (40), dans les interstices (41, 42) présents entre la face d'entrefer (23) et le logement d'aimant (40) et entre la face axiale (24) et le logement d'aimant (40), sans mouiller les barrières de flux (34).

2. Procédé de fabrication d'un rotor (9) comportant des aimants permanents (14) enterrés selon la revendication 1, **caractérisé en ce que** l'ajout de colle (29), pour chaque logement d'aimant (40), est réalisé au moyen d'au moins une buse (28) qui est déplacée, au moins par sections, dans le logement d'aimant (40) de manière synchronisée et à équidistance par rapport à l'aimant permanent (14) à insérer.

3. Procédé de fabrication d'un rotor (9) comportant des aimants permanents (14) enterrés selon la revendication 1 ou 2, **caractérisé en ce que** l'interstice d'assemblage (41) entre la face d'entrefer (23) de l'aimant permanent (14) et la face intérieure (43) correspondante du logement d'aimant (40) est établi du fait de la forme de la face d'insertion (18) de l'aimant permanent (14) et/ou d'éléments de maintien (33) présents sur le côté du logement d'aimant (40) qui est tourné vers le périmètre extérieur du rotor (9) et/ou de champs magnétiques externes.

4. Procédé de fabrication d'un rotor (9) comportant des aimants permanents (14) enterrés selon une ou plusieurs des revendications précédentes, **caractérisé en ce que** les aimants permanents (14) sont insérés dans les logements d'aimant (40) en ayant été préalablement magnétisés ou au moins partiellement magnétisés, ou en étant non magnétisés.

5. Procédé de fabrication d'un rotor (9) comportant des aimants permanents (14) enterrés et comportant au moins deux noyaux feuilletés (11) équipés selon l'une des revendications précédentes, lesquels sont assemblés axialement en un noyau feuilleté total de façon à produire un étagement, selon une vue axiale, ledit assemblage des noyaux feuilletés (11), vu selon la direction circonférentielle, se faisant avec un décalage axial selon un même angle prédéterminé ou selon des angles différents, l'angle pouvant être de 0° ou aller jusqu'à 30°.

6. Procédé de fabrication d'un rotor (9) comportant des aimants permanents (14) enterrés selon une ou plusieurs des revendications précédentes, **caractérisé en ce qu'**il présente, au moins par sections, la conception d'au moins une arête entre une face de champ magnétique (23, 24) et la face d'insertion (18) de l'aimant permanent (14).

7. Procédé de fabrication d'un rotor (9) comportant des aimants permanents (14) enterrés selon une ou plusieurs des revendications précédentes, **caractérisé en ce que** la zone et/ou les arêtes présentes entre une face de champ magnétique (23, 24) et la face d'insertion (18) de l'aimant permanent (14) sont conçues, au moins par sections, par des surfaces planes.

8. Procédé de fabrication d'un rotor (9) comportant des aimants permanents (14) enterrés selon une ou plusieurs des revendications précédentes, **caractérisé en ce que** la zone et/ou les arêtes présentes entre une face de champ magnétique (23, 24) et la face d'insertion (18) de l'aimant permanent (14) sont conçues, au moins par sections, de manière arrondie.

9. Procédé de fabrication d'un rotor (9) comportant des aimants permanents (14) enterrés selon une ou plusieurs des revendications précédentes, **caractérisé en ce que** la face d'insertion (18) de l'aimant permanent (14) présente au moins un canal transversal ou une cavité (22).

10. Procédé de fabrication d'un rotor (9) comportant des aimants permanents (14) enterrés selon une ou plusieurs des revendications précédentes, **caractérisé en ce que** la face d'insertion (18) de l'aimant permanent (14) présente des arêtes conçues de manière symétrique par rapport à son axe longitudinal ou transversal.

11. Procédé de fabrication d'un rotor (9) comportant des aimants permanents (14) enterrés selon une ou plusieurs des revendications précédentes, **caractérisé en ce que** la face d'insertion (18) de l'aimant permanent (14) présente une conception d'arêtes asymétrique par rapport à son axe longitudinal ou transversal.

12. Procédé de fabrication d'un rotor (9) comportant des aimants permanents (14) enterrés selon une ou plusieurs des revendications précédentes, **caractérisé en ce que** la face d'insertion (18) de l'aimant permanent (14) forme des nervures (21) à ses extrémités dirigées vers les faces de barrières de flux (17).

13. Machine dynamoélectrique (1), notamment machine synchrone à excitation par aimants permanents, comportant un rotor (9) fabriqué selon l'une des revendications précédentes.

14. Utilisation d'une machine dynamoélectrique (1), notamment machine synchrone à excitation par aimants permanents, selon la revendication 13 comme dispositif d'entraînement de pompes, ventilateurs, compresseurs, tables à rouleaux, installations de convoyage.
